# EUROPÄISCHE PATENTANMELDUNG

(11) **EP 1 821 494 A1**
(43) Veröffentlichungstag der Anmeldung: **22.08.2007**
(21) Anmeldenummer: 07102357.6
(22) Anmeldetag: 14.02.2007
(51) Int. Cl.: H04L 29/06

(54) **Verfahren und System zur verknüpften leitungsvermittelten und paketvermittelten Übertragung von Daten**

(30) Priorität: 15.02.2006 DE 102006007062
(71) Anmelder: BenQ Mobile GmbH & Co. oHG, 81667 München (DE)
(72) Erfinder: Naumann, Mirko, 82538, Geretsried (DE)

(57) **Zusammenfassung**

Die Erfindung betrifft ein Verfahren zur verknüpften leitungsvermittelten und paketvermittelten Übertragung von Daten zwischen einem ersten Endgerät (A) (10) und einem zweiten Endgerät (B) (70), die über ein Netzwerk (40) zur Übertragung von Daten kommunizieren, wobei das Netzwerk zur leitungsvermittelten Datenübertragung und zur paketvermittelten Datenübertragung eingerichtet ist, unter Verwendung einer Einrichtung zum leitungsvermittelten und paketvermittelten Senden und Empfangen von Daten (20; 50) und einer Einrichtung zur Verknüpfung der leitungsvermittelten und paketvermittelten Datenübertragung (30; 60), gekennzeichnet durch die Schritte Übermitteln von ersten Referenzdaten auf einen Kommunikationsendpunkt des zweiten Endgeräts (B) für die leitungsvermittelte Datenübertragung an die Einrichtung zum leitungsvermittelten und paketvermittelten Senden und Empfangen von Daten durch den Nutzer mittels des ersten Endgeräts (A) (201; 301; 401; 501), Auswählen eines Protokolls für die paketvermittelte Datenübertragung (202; 302; 402; 502), Ermitteln von zweiten Referenzdaten auf einen Kommunikationsendpunkt des zweiten Endgeräts (B) für die paketvermittelte Datenübertragung (203; 303; 403; 503), wobei die zweiten Referenzdaten mit den ersten Referenzdaten verknüpft sind, Auswählen von Signalisierungsdaten (204; 304; 404; 504) zur Signalisierung des Aufbaus der leitungsvermittelten Verbindung auf der Seite des zweiten Endgeräts (B) durch den Nutzer mittels des ersten Endgeräts (A), paketvermitteltes Übertragen der Signalisierungsdaten an das zweite Endgerät (B) (207; 309; 408; 508) unter Verwendung der zweiten Referenzdaten auf den Kommunikationsendpunkt des zweiten Endgeräts (B) für die paketvermittelte Datenübertragung, Aufbauen einer leitungsvermittelten Verbindung zwischen dem ersten Endgerät (A) und dem zweiten Endgerät (B) (208; 310; 409; 509) unter Verwendung der ersten Referenzdaten auf den Kommunikationsendpunkt des zweiten Endgeräts (B) für die leitungsvermittelte Datenübertragung, Verknüpfen der paketvermittelt übertragenen Daten mit der leitungsvermittelten Verbindung (209; 311; 410; 510) auf der Seite des zweiten Endgeräts (B), Signalisieren des Bereitstehens der leitungsvermittelten Verbindung (210; 312; 411; 511) auf der Seite des zweiten Endgeräts (B) unter Verwendung der paketvermittelt übertragenen Signalisierungsdaten.

## Beschreibung

Die vorliegende Erfindung betrifft ein Verfahren und ein System zur verknüpften leitungsvermittelten und paketvermittelten Übertragung von Daten zwischen einem ersten Endgerät A und einem zweiten Endgerät B, die über ein Netzwerk zur Übertragung von Daten kommunizieren, wobei das Netzwerk zur leitungsvermittelten Datenübertragung und zur paketvermittelten Datenübertragung eingerichtet ist. Dabei wird eine Einrichtung zum leitungsvermittelten und paketvermittelten Senden und Empfangen von Daten sowie eine Einrichtung zur Verknüpfung der leitungsvermittelten und paketvermittelten Datenübertragung verwendet.

Aus dem Stand der Technik sind derartige Verfahren vor allem für die Videotelephonie bekannt geworden. Videotelephoniedaten zeichnen sich dadurch aus, dass sie einerseits Sprachdaten enthalten, die wie ein normales Telefongespräch zu behandeln sind, und zugleich Bewegtbilddaten, deren Übertragung über eine normale Telefonverbindung aufgrund der strikten, über die Zeit unveränderlichen Bandbreitereservierung ineffizient ist.

Unter anderem aus diesem Grund existieren in Telekommunikationsnetzwerken zwei unterschiedliche Übertragungsarten: Die Leitungsvermittlung und die Paketvermittlung. Bei der Leitungsvermittlung wird die Übertragungsverbindung zwischen der Sendeseite und der Empfangsseite vor dem Beginn der Übertragung reserviert. Telefongespräche beispielsweise werden in der Regel leitungsvermittelt übertragen. Es ist ein Nachteil dieses Vermittlungsverfahren, dass die Übertragungsverbindung selbst dann reserviert ist, wenn keine Informationen über die Verbindung übertragen werden. Deswegen wurden in den letzten Jahren Verfahren aus dem Internetbereich in Telekommunikationsnetzwerke integriert, die für die Übertragung von Nicht-Sprachdaten optimiert sind. Diese werden paketvermittelt übertragen. Bei der Paketvermittlung werden die zu übertragenden Informationen in Pakete verpackt, die Informationen über ihr Ziel enthalten. Es wird vor der Übertragung keine physische Leitung zwischen dem Sender und dem Empfänger geschaltet.

Leitungsvermittelt und paketvermittelt übertragene Daten sind zunächst unabhängig voneinander. In aktuellen Mobiltelefonen der so genannten Generation 2,5 (GPRS-fähige GSM-Telefone) ist das parallele Verwenden der Leitungsvermittlung und der Paketvermittlung nur dann möglich, wenn der Chip-Satz des Gerätes den Dual Transfer Mode unterstützt. UMTS-Telefone hingegen unterstützen diese kombinierte Verwendung von Beginn an. Möchte man die leitungsvermittelte und paketvermittelte Datenübertragung verbinden, bedarf es einer Verknüpfung der Leitungsvermittlung mit paketvermittelt übertragenen Daten. Würde eine solche Verknüpfung nicht stattfinden, müsste die Adressierung der Leitungsvermittlung und der Paketvermittlung völlig unabhängig voneinander realisiert werden. Trotz eines Abbruchs der leitungsvermittelten Verbindung würden weiterhin paketvermittelte Daten übertragen werden und würden auf der Empfängerseite angezeigt werden. Für die Aufgabe der Verknüpfung existieren im Stand der Technik verschiedene Verfahren.

Zunächst wäre es denkbar, während der Signalisierung des Aufbaus einer leitungsvermittelten Verbindung Referenzdaten auf paketvermittelt zu übertragende Daten zu übergeben. Für die Signalisierung des Aufbaus einer leitungsvermittelten Verbindung werden in heutigen Telekommunikationsnetzwerken jedoch festgelegte Signalisierungsprotokolle verwendet, die nur einen begrenzten Umfang an Signalisierungsdaten zulassen, wie z.B. die Nummer des Anrufers und die gewählte Nummer. Große Datenmengen sind im aktuell verwendeten Standard nicht vorgesehen. Für zukünftige Dienste kann der Umfang dieser Signalisierungsdaten auf Basis der bestehenden Protokolle nicht erweitert werden.

Deswegen wurde im Rahmen des Third Generation Partnership Projects (3GPP) ein Standard entwickelt für die Verknüpfung von leitungsvermittelter und paketvermittelter Datenübertragung. Die dazugehörige technische Spezifikation 3GPP TS 23.279 liegt derzeit in der Version 7.1.0 vor. Die Spezifikation baut auf dem IP Multimedia Subsystem (IMS) auf (siehe 3GPP TS 23.228). Das IP Multimedia Subsystem verwendet das Session Initiation Protocol (SIP). Der Standard 3GPP TS 23.279 löst allerdings nur das Problem, eine IP Multimedia Subsystem Session für eine bereits bestehende leitungsvermittelte Verbindung aufzubauen. Alternativ kann zu einer bestehenden IP Multimedia Subsystem Session eine leitungsvermittelte Verbindung aufgebaut werden. Daten paketvermittelt bereits vor einer stehenden leitungsvermittelten Verbindung zu übertragen, ist dabei nicht vorgesehen.

Aufgabe der Erfindung ist es, ein verbessertes Verfahren zur verknüpften leitungsvermittelten und paketvermittelten Übertragung von Daten anzugeben mit einem erweiterten Einsatzbereich.

Erfindungsgemäß werden zur Lösung dieser Aufgabe ein Verfahren mit den Merkmalen des Anspruchs 1, ein System mit den Merkmalen des Anspruchs 42 und ein Computerprogrammprodukt mit den Merkmalen des Anspruchs 43 bereitgestellt. Vorteilhafte Ausgestaltungen und bevorzugte Ausführungsbeispiele der Erfindung sind in den Unteransprüchen angegeben.

Die Erfindung gibt ein Verfahren zur verknüpften leitungsvermittelten und paketvermittelten Übertragung von Daten zwischen einem ersten Endgerät A und einem zweiten Endgerät B, die über ein Netzwerk zur Übertragung von Daten kommunizieren, wobei das Netzwerk zur leitungsvermittelten Datenübertragung und zur paketvermittelten Datenübertragung eingerichtet ist, an. Das Verfahren verwendet eine Einrichtung zum leitungsvermittelten und paketvermittelten Senden und Empfangen von Daten und eine Einrichtung zur Verknüpfung der leitungsvermittelten und paketvermittelten Datenübertragung.

Erfindungsgemäß umfasst das Verfahren die folgenden Schritte:
- Übermitteln von ersten Referenzdaten auf einen Kommunikationsendpunkt des zweiten Endgeräts B für die leitungsvermittelte Datenübertragung an die Einrichtung zum leitungsvermittelten und paketvermittelten Senden und Empfangen von Daten durch den Nutzer mittels des ersten Endgeräts A,
- Auswählen eines Protokolls für die paketvermittelte Datenübertragung,
- Ermitteln von zweiten Referenzdaten auf einen Kommunikationsendpunkt des zweiten Endgeräts B für die paketvermittelte Datenübertragung, wobei die zweiten Referenzdaten mit den ersten Referenzdaten verknüpft sind,
- Auswählen von Signalisierungsdaten zur Signalisierung des Aufbaus der leitungsvermittelten Verbindung auf der Seite des Endgeräts B durch den Nutzer mittels des ersten Endgeräts A,
- Paketvermitteltes Übertragen der Signalisierungsdaten an das Endgerät B unter Verwendung der zweiten Referenzdaten auf den Kommunikationsendpunkt des zweiten Endgeräts B für die paketvermittelte Datenübertragung,
- Aufbauen einer leitungsvermittelten Verbindung zwischen Endgerät A und Endgerät B unter Verwendung der ersten Referenzdaten auf den Kommunikationsendpunkt des zweiten Endgeräts B für die leitungsvermittelte Datenübertragung,
- Verknüpfen der paketvermittelt übertragenen Daten mit der leitungsvermittelten Verbindung auf der Seite des Endgeräts B,
- Signalisieren des Bereitstehens der leitungsvermittelten Verbindung auf der Seite des Endgeräts B unter Verwendung der paketvermittelt übertragenen Signalisierungsdaten.

Der Vorteil des erfindungsgemäßen Verfahrens liegt darin, dass bereits vor dem Aufbau einer leitungsvermittelten Verbindung, paketvermittelt Daten übertragen werden. Diese Daten können beispielsweise dazu verwendet werden, die Anrufsignalisierung mit innovativen Ideen und Diensten zu bereichern. Beispielsweise kann der Anrufende einen Klingelton übertragen, der dem Angerufenen schon beim Klingeln signalisiert, wer anruft. Alternativ könnte der Anrufende ein Bild, seine Visitenkarte, einen Anrufgrund oder auch eine Animation übertragen.

Vorzugsweise handelt es sich bei mindestens einem der Endgeräte A und/oder B um ein Mobiltelefon.

Das Netzwerk zur Übertragung von Daten kann ein Mobilfunknetz sein.

Bei den ersten Referenzdaten auf einen Kommunikationsendpunkt des zweiten Endgeräts B für die leitungsvermittelte Datenübertragung handelt es sich vorzugsweise um eine Mobile Subscriber Integrated Services Digital Network Number (MSISDN).

Das erste Endgerät A kann die Einrichtung zum leitungsvermittelten und paketvermittelten Senden und Empfangen von Daten und/oder die Einrichtung zur Verknüpfung der leitungsvermittelten und paketvermittelten Datenübertragung umfassen.

Vorzugsweise umfasst auch das zweite Endgerät B eine Einrichtung zum leitungsvermittelten und paketvermittelten Senden und Empfangen von Daten und/oder eine Einrichtung zur Verknüpfung der leitungsvermittelten und paketvermittelten Datenübertragung.

Vorteilhafterweise handelt es sich bei den zweiten Referenzdaten auf einen Kommunikationsendpunkt des zweiten Endgeräts B für die paketvermittelte Datenübertragung um einen Session Initiation Protocol Uniform Resource Identifier (SIP URI).

Der SIP URI wird vorzugsweise dadurch ermittelt, dass die ersten Referenzdaten auf einen Kommunikationsendpunkt des zweiten Endgeräts B für die leitungsvermittelte Datenübertragung einem bekannten Postfix vorangestellt werden. Alternativ können die zweiten Referenzdaten auf einen Kommunikationsendpunkt des zweiten Endgeräts B für die paketvermittelte Datenübertragung unter Verwendung der ersten Referenzdaten auf einen Kommunikationsendpunkt des zweiten Endgeräts B für die leitungsvermittelte Datenübertragung aus einem Adressbuch abgefragt werden. Der SIP URI kann ebenfalls mit Hilfe der MSISDN unter Verwendung von ENUM gemäß RFC 2916 ermittelt werden. ENUM steht für Electronic Numbering und dient dazu, einen URI auf Grundlage einer Telefonnummer zu ermitteln und über ein Domain Name System eine mit dem ermittelten URI verknüpfte Endpunktadresse für einen bestimmten Dienst abzufragen.

Bei den paketvermittelt zu übertragenen Signalisierungsdaten handelt es sich vorzugsweise um ein Audiosignal, das dazu geeignet ist, auf Endgerät B abgespielt zu werden. Alternativ kann es sich bei den Signalisierungsdaten um visuelle Daten handeln, die dazu geeignet sind, auf Endgerät B angezeigt zu werden. Ebenso können die Signalisierungsdaten Daten sein, die von der Identität des Nutzers des Endgeräts A abhängen. Alternativ können die Signalisierungsdaten eine textuelle Nachricht und/oder eine Animation sein.

Für die paketvermittelte Datenübertragung wird auf der Netzwerkschicht vorzugsweise das Internetprotokoll gemäß RFC 791 verwendet.

Darauf aufbauend wird vorzugsweise für die paketvermittelte Datenübertragung das Session Initiation Protocol benutzt. Mit Hilfe des Session Initiation Protocols kann zur Übertragung der Signalisierungsdaten zunächst eine SIP-Sitzung aufgebaut werden. Nach dem Aufbau der SIP-Sitzung kann zur Übertragung der Signalisierungsdaten zum Beispiel das User Datagram Protocol verwendet werden oder aber das Message Session Relay Protocol. Alternativ zum Aufbau einer SIP-Sitzung kann über das Session Initiation Protocol mit Hilfe einer Instant Message die Übertragung der Signalisierungsdaten bewerkstelligt werden.

Vorzugsweise wird für die paketvermittelte Datenübertragung ein IP Multimedia Subsystem verwendet, das das Session Initiation Protocol verwendet.

Vor der paketvermittelten Datenübertragung der Signalisierungsdaten kann das erste Endgerät A ein Datenformat der Signalisierungsdaten von dem zweiten Endgerät abfragen.

Zur Verwirklichung von Fehlertoleranz kann die Einrichtung zum leitungsvermittelten und paketvermittelten Senden und Empfangen von Daten einen Zugriff in geordneter Reihenfolge auf eine Liste von auswählbaren Protokollen für die paketvermittelte Datenübertragung besitzen. Diese Liste von auswählbaren Protokollen umfasst vorzugsweise ein IP Multimedia Subsystem, ein Session Initiation Protocol und das Internetprotokoll. Die Einrichtung zum leitungsvermittelten und paketvermittelten Senden und Empfangen von Daten kann ein Protokoll aus der Liste auswählen und kann unter Verwendung des ausgewählten Protokolls die Signalisierungsdaten übertragen. Falls die Signalisierungsdaten mittels des gewählten Protokolls nicht übertragen werden können, kann die Einrichtung zum leitungsvermittelten und paketvermittelten Senden und Empfangen von Daten das Protokoll für die paketvermittelte Datenübertragung für die Übertragung der Signalisierungsdaten verwenden, das auf das zuvor gewählte Protokoll in der Liste folgt.

Eine SIP-Nachricht enthält vorzugsweise eine Referenz auf eine leitungsvermittelte Verbindung zur Verknüpfung der paketvermittelten Datenübertragung mit der leitungsvermittelten Datenübertragung. Diese Referenz kann beispielsweise im Content-Disposition-Header einer Instant Message enthalten sein oder auch in einem anderen Header oder im Payload der Instant Message. In dem Falle, dass zunächst eine SIP-Sitzung aufgebaut wird, kann diese Referenz im Content-Disposition-Header einer INVITE Message enthalten sein. Alternativ dazu kann die Verknüpfung der paketvermittelt übertragenen Daten mit der leitungsvermittelten Verbindung anhand von Daten aus dem Telefonbuch des zweiten Endgeräts B vorgenommen werden. Ebenso kann die Verknüpfung der paketvermittelt übertragenen Daten mit der leitungsvermittelten Verbindung dadurch vorgenommen werden, dass die ersten Referenzdaten auf einen Kommunikationsendpunkt des zweiten Endgeräts B für die leitungsvermittelte Datenübertragung Bestandteil der zweiten Referenzdaten auf einen Kommunikationsendpunkt des zweiten Endgeräts B für die paketvermittelte Datenübertragung sind. Falls der umgekehrte Fall vorliegt, nämlich, dass die zweiten Referenzdaten auf einen Kommunikationsendpunkt des zweiten Endgeräts B für die paketvermittelte Datenübertragung Bestandteil der ersten Referenzdaten auf einen Kommunikationsendpunkt des zweiten Endgeräts B für die leitungsvermittelte Datenübertragung sind, kann ebenfalls eine leichte Verknüpfung der paketvermittelt übertragenen Daten mit der leitungsvermittelten Verbindung vorgenommen werden.

Vorzugsweise erfolgt nicht nur eine Verknüpfung der paketvermittelt übertragenen Daten mit der leitungsvermittelten Verbindung, sondern zusätzlich wird eine Synchronisation der paketvermittelt übertragenen Daten mit der leitungsvermittelten Verbindung durchgeführt.

Wenn die verknüpfte leitungsvermittelte Verbindung nicht aufgebaut werden kann, werden die paketvermittelt übertragenen Daten vorzugsweise als ungültig gekennzeichnet und/oder gelöscht.

Nach dem Verknüpfen der paketvermittelt übertragenen Daten mit der leitungsvermittelten Verbindung werden die paketvermittelt
übertragenen Daten zum Signalisieren des Bereitstehens der leitungsvermittelten Verbindung auf der Seite des Endgeräts B verwendet. Vorzugsweise wird das paketvermittelt übertragene Audiosignal abgespielt. Es können auch die paketvermittelt übertragenen visuellen Daten angezeigt werden. Alternativ können die paketvermittelt übertragenen Daten angezeigt werden, die von der Identität des Nutzers des Endgerätes A abhängen. Auch eine paketvermittelt übertragene textuelle Nachricht und/oder eine paketvermittelt übertragene Animation kann angezeigt werden.

Die Erfindung umfasst zudem ein System zur Durchführung von Schritten des oben beschriebenen Verfahrens, umfassend
- eine Einrichtung zur Ermittlung von zweiten Referenzdaten auf einen Kommunikationsendpunkt des zweiten Endgeräts B für die paketvermittelte Datenübertragung, wobei die zweiten Referenzdaten mit den ersten Referenzdaten verknüpft sind,
- eine Einrichtung zur Auswahl von Signalisierungsdaten zur Signalisierung des Aufbaus der leitungsvermittelten Verbindung auf der Seite des Endgeräts B durch den Nutzer mittels des ersten Endgeräts A,
- eine Einrichtung zur paketvermittelten Übertragung der Signalisierungsdaten an das Endgerät B unter Verwendung der zweiten Referenzdaten auf den Kommunikationsendpunkt des zweiten Endgeräts B für die paketvermittelte Datenübertragung,
- eine Einrichtung zum Aufbau einer leitungsvermittelten Verbindung zwischen Endgerät A und Endgerät B unter Verwendung der ersten Referenzdaten auf den Kommunikationsendpunkt des zweiten Endgeräts B für die leitungsvermittelte Datenübertragung,
- eine Einrichtung zur Verknüpfung der paketvermittelt übertragenen Daten mit der leitungsvermittelten Verbindung auf der Seite des Endgeräts B und
- eine Einrichtung zum Signalisieren des Bereitstehens der leitungsvermittelten Verbindung auf der Seite des Endgeräts B unter Verwendung der paketvermittelt übertragenen Signalisierungsdaten.

Zusätzlich umfasst die Erfindung ein Computerprogrammprodukt, das in den Speicher eines Endgerätes geladen werden kann und das Programmteile umfasst zur Durchführung von mindestens einem der oben beschriebenen Schritte, wenn das besagte Computerprogrammprodukt auf dem Endgerät ausgeführt wird.

Das erfindungsgemäße Verfahren, das erfindungsgemäße System und das erfindungsgemäße Computerprogrammprodukt erlauben eine verknüpfte leitungsvermittelte und paketvermittelte Übertragung von Daten zwischen einem ersten Endgerät A und einem zweiten Endgerät B.

Ein Vorteil gegenüber bekannten Lösungen besteht darin, dass paketvermittelte Daten bereits vor dem Aufbau einer leitungsvermittelten Verbindung übertragen werden können und die paketvermittelt übertragenen Daten dabei mit der leitungsvermittelten Verbindung verknüpft werden. Dadurch sind neue Dienste möglich. Zum Beispiel kann der Anruf individuell signalisiert werden, indem ein Klingelton oder ein Bild des Anrufers an den Angerufenen übertragen werden, um damit dem Angerufenen schon beim Klingeln zu signalisieren, wer anruft.

Ein weiterer Vorteil der Erfindung besteht darin, dass die Verknüpfung zwischen der leitungsvermittelten Datenübertragung und der paketvermittelten Datenübertragung auf dem Endgerät vorgenommen wird. Das Netzwerk muss demnach die Verknüpfung nicht unterstützen. Es muss lediglich zur leitungsvermittelten Datenübertragung und zur paketvermittelten Datenübertragung eingerichtet sein.

Sollte das erste Endgerät A für das oben beschriebene Verfahren eingerichtet sein, während das zweite Endgerät B für das oben beschriebene Verfahren nicht eingerichtet ist, so funktioniert das Verfahren zwar nicht, aber darüber hinaus entsteht kein zusätzliches Problem. Sollte beispielsweise das zweite Endgerät B nicht dafür eingerichtet sein, paketvermittelte Daten zu empfangen, so empfängt das zweite Endgerät B keine paketvermittelten Daten. Dennoch erhält das zweite Endgerät B die leitungsvermittelte Verbindung. Beispielsweise hieße dies, dass ein Mobiltelefon als konkretes Ausführungsbeispiel des zweiten Endgerätes B zwar den Anruf erhält, aber nicht die damit verknüpften paketvermittelten Daten. Das bedeutet, dass die Grundfunktion des Mobiltelefons erhalten bleibt, auch wenn das Verfahren als Ganzes nicht durchgeführt werden kann. Es kommen lediglich die paketvermittelten Daten nicht an.

Sollte das zweite Endgerät B zwar für den Empfang von leitungsvermittelten und paketvermittelten Daten eingerichtet sein, aber keine Vorrichtung zur Verknüpfung der leitungsvermittelten und paketvermittelten Datenübertragung besitzen, so entsteht ebenfalls kein zusätzliches Problem. Sowohl die leitungsvermittelten Daten als auch die paketvermittelten Daten kommen an; sie können lediglich nicht verknüpft werden. Für das Beispiel der Übertragung eines Klingeltons hieße das zum Beispiel, dass sowohl der paketvermittelt übertragene Klingelton als auch der Anruf ankommen. Für die Signalisierung des Anrufs würde jedoch nicht der übertragene Klingelton, sondern der ganz normale Standardklingelton des zweiten Endgeräts B verwendet werden.

Ein weiterer Vorteil des oben beschriebenen Verfahrens liegt in seiner Fehlertoleranz. Ist in dem die Verbindung aufbauenden Gerät ein IP-Multimedia-Subsystem-Netz konfiguriert und dieses aktuell erreichbar, wird vorzugsweise zuerst versucht, den Empfänger über dieses Netzwerk zu erreichen. Sollte dies nicht erfolgreich abgeschlossen werden und ist ein allgemeines SIP-basiertes Netzwerk konfiguriert und ist dieses erreichbar, wird vorzugsweise versucht, den Empfänger über dieses Netzwerk zu erreichen. Sollte auch dies fehlschlagen, ist denkbar, auch andere IP-basierte Signalisierungsdienste außer SIP zu verwenden, um den Empfänger zu erreichen. Sollten alle Wege fehlschlagen, ist das Verfahren nicht durchführbar.

Vorteilhafte Ausgestaltungen und weitere Details der vorliegenden Erfindung werden im Folgenden anhand verschiedener Ausführungsbeispiele mit Bezug auf die Figuren beschrieben.
Fig. 1 zeigt ein System zur erfindungsgemäßen verknüpften leitungsvermittelten und paketvermittelten Datenübertragung.
Fig. 2 zeigt ein Ausführungsbeispiel des erfindungsgemäßen Verfahrens.
Fig. 3 zeigt ein weiteres Ausführungsbeispiel des erfindungsgemäßen Verfahrens unter besonderer Berücksichtigung der Fehlertoleranzmechanismen.
Fig. 4 stellt ein weiteres Ausführungsbeispiel des erfindungsgemäßen Verfahrens dar unter besonderer Berücksichtigung des Erstellens eines Tel.-URI.
Fig. 5 zeigt ein weiteres Ausführungsbeispiel des erfindungsgemäßen Verfahrens unter besonderer Berücksichtigung der Abfrage eines SIP URI über ENUM.

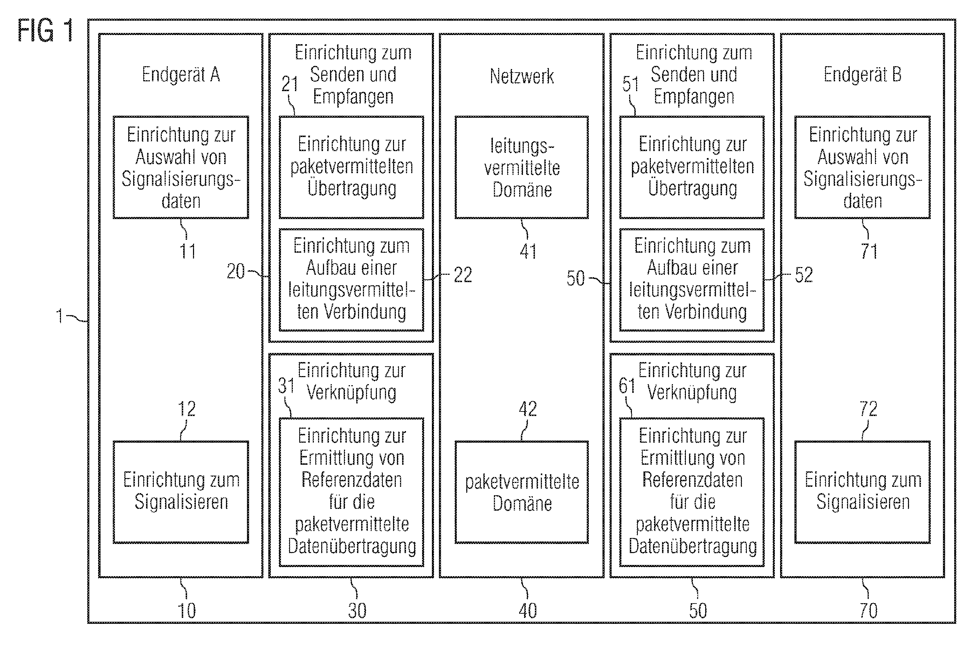

Im Folgenden wird Bezug nehmend auf Fig. 1 der funktionale Aufbau eines ersten Ausführungsbeispiels eines erfindungsgemäßen Systems (1) zur verknüpften leitungsvermittelten und paketvermittelten Übertragung von Daten beschrieben.

Das in Fig. 1 gezeigte erfindungsgemäße Endgerät A (10) enthält eine Einrichtung zur Auswahl von Signalisierungsdaten (11) und eine Einrichtung zum Signalisieren (12). Die Einrichtung zur Auswahl von Signalisierungsdaten (11) zeigt dem Nutzer des Endgeräts A verschieden Daten an, die auf dem Endgerät A gespeichert sind und die der Nutzer verwenden kann, um den Anruf auf der Seite des Endgeräts B zu signalisieren. Beispielsweise könnten auf dem Endgerät A diverse Klingeltöne gespeichert sein, ein Bild des Nutzers des Endgeräts A, seine persönliche Visitenkarte oder eine Animation. Die Einrichtung zum Signalisieren (12) empfängt von einem etwaig anrufenden zweiten Endgerät paketvermittelt Daten und verwendet diese Daten, um den Anruf dem Nutzer des Endgeräts A zu signalisieren. Dieses Signalisieren kann bedeuten, dass ein Klingelton abgespielt, dass ein übertragenes Bild angezeigt, dass die erhaltene Visitenkarte dargestellt oder dass die Animation abgespielt wird. Dem Fachmann ist bewusst, dass diese Beispiele nicht abschließend sind, sondern lediglich der Illustration dienen.

Die in Fig. 1 gezeigte Vorrichtung zum Senden und Empfangen (20) umfasst eine Einrichtung zur paketvermittelten Übertragung (21) und eine Einrichtung zum Aufbau einer leitungsvermittelten Verbindung (22). Die Einrichtung zur paketvermittelten Übertragung (21) sendet paketvermittelt Daten an das Endgerät B (70) und empfängt etwaige Daten von dort. Dabei verwendet die Einrichtung zur paketvermittelten Übertragung (21) das Netzwerk (40). Insbesondere verwendet die Einrichtung 21 die paketvermittelte Domäne (42) des Netzwerks (40). Die Einrichtung zum Aufbau einer leitungsvermittelten Verbindung (22) baut eine leitungsvermittelte Verbindung zum Endgerät B (70) auf. Dabei verwendet die Einrichtung zum Aufbau einer leitungsvermittelten Verbindung (22) das Netzwerk (40), insbesondere die leitungsvermittelte Domäne (41).

Die in Fig. 1 gezeigte erfindungsgemäße Einrichtung zur Verknüpfung der leitungsvermittelten und paketvermittelten Datenübertragung (30) enthält eine Einrichtung zur Ermittlung von Referenzdaten auf einen Kommunikationsendpunkt für die paketvermittelte Datenübertragung (31). Die Einrichtung zur Ermittlung von Referenzdaten für die paketvermittelte Datenübertragung (31) ermittelt die Referenzdaten beispielsweise dadurch, dass sie die vom Nutzer eingegebene Telefonnummer einem bekannten Postfix voranstellt und auf diese Weise einen so genannten Tel.-URI erstellt. Alternativ kann der SIP-URI anhand der Telefonnummer aus dem Telefonbuch abgefragt werden. Weiterhin ist es möglich, dass anhand der Telefonnummer der SIP-URI über ENUM erfragt wird.

Auch auf der Seite des Endgeräts B existiert eine Einrichtung zum leitungsvermittelten und paketvermittelten Senden und Empfangen von Daten (50). Diese Einrichtung umfasst eine Einrichtung zur paketvermittelten Übertragung (51) und eine Einrichtung zum Aufbau einer leitungsvermittelten Verbindung (52). Diese beiden Einrichtungen (51, 52) funktionieren analog zu der Einrichtung zur paketvermittelten Übertragung (21) und der Einrichtung zum Aufbau einer leitungsvermittelten Verbindung (22) auf der Seite des Endgeräts A (10).

Weiterhin existiert auf der Seite des Endgeräts B eine weitere Einrichtung zur Verknüpfung der leitungsvermittelten und paketvermittelten Datenübertragung (60). Diese Einrichtung enthält eine Einrichtung zur Ermittlung von Referenzdaten für die paketvermittelte Datenübertragung (61). Diese Einrichtung (61) funktioniert analog zu der Einrichtung zur Ermittlung von Referenzdaten für die paketvermittelte Datenübertragung (31), die sich auf der Seite des Endgeräts A (10) befindet.

Vorzugsweise umfasst auch das Endgerät B (70) eine Einrichtung zur Auswahl von Signalisierungsdaten (71) und eine Einrichtung zum Signalisieren (72). Diese beiden Einrichtungen (71, 72) funktionieren analog zu der Einrichtung zur Auswahl von Signalisierungsdaten (11) und zu der Einrichtung zum Signalisieren (12) auf der Seite des Endgeräts A (10).

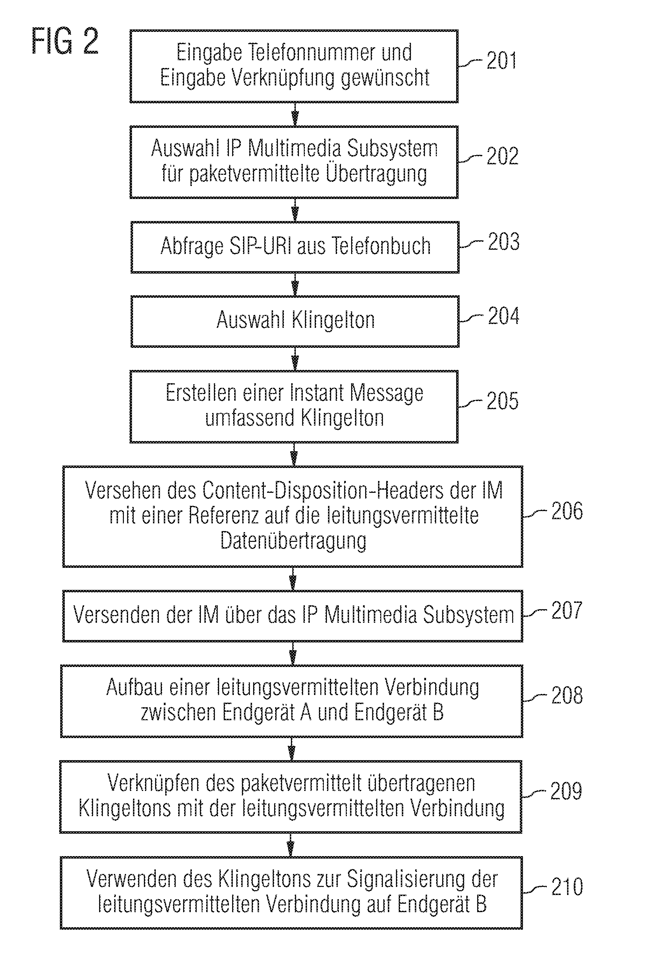

Die Fig. 2 zeigt ein Ausführungsbeispiel für das erfindungsgemäße Verfahren. Bei diesem Ausführungsbeispiel gibt der Nutzer zunächst die Telefonnummer an, die er anrufen möchte, und gibt an, dass er eine verknüpfte Datenübertragung wünscht (Schritt 201). Die Einrichtung zum leitungsvermittelten und paketvermittelten Senden und Empfangen von Daten wählt in diesem Fall das IP-Multimedia-Subsystem aus für die paketvermittelte Übertragung (Schritt 202). Da das IP-Multimedia-Subsystem das Session Initiation Protocol verwendet, wird eine Session Initiation Protocol-Adresse (SIP URI) benötigt. Diesen SIP URI fragt die Einrichtung zur Verknüpfung der leitungsvermittelten und paketvermittelten Datenübertragung unter Verwendung der Telefonnummer aus dem Telefonbuch ab (Schritt 203). Danach werden dem Nutzer alle verwendbaren Signalisierungsdaten angezeigt, die das Endgerät A speichert und die dazu verwendet werden können, den Anruf auf der Seite des Endgeräts B zu signalisieren. Im vorliegenden Ausführungsbeispiel wählt der Nutzer einen Klingelton aus (Schritt 204). Die Einrichtung zum leitungsvermittelten und paketvermittelten Senden und Empfangen erstellt eine Instant Message und fügt den ausgewählten Klingelton in diese Instant Message ein (Schritt 205). Die Instant Message enthält standardgemäß einen Content-Disposition-Header. In diesen Content-Disposition-Header wird eine Referenz auf die leitungsvermittelte Datenübertragung eingefügt (Schritt 206). Alternativ könnte auch ein anderer Header verwendet werden oder aber eine Referenz auf die leitungsvermittelte Datenübertragung wird in den Payload der Instant Message eingefügt. Die so erstellte Instant Message wird anschließend über das IP-Multimedia-Subsystem versendet (Schritt 207). Nachdem das Endgerät B den Empfang der Instant Message bestätigt hat, wird eine leitungsvermittelte Verbindung zwischen dem Endgerät A und dem Endgerät B aufgebaut (Schritt 208). Die Einrichtung zur Verknüpfung der leitungsvermittelten und paketvermittelten Datenübertragung, die sich auf der Seite des Endgeräts B befindet, verknüpft das paketvermittelt übertragene Signal mit der leitungsvermittelten Verbindung (Schritt 209). In diesem Falle wird also der paketvermittelt übertragene Klingelton mit der leitungsvermittelten Verbindung verknüpft. Die Verknüpfung erfolgt anhand der Daten, die sich im Content-Disposition-Header der Instant Message befinden. Die Einrichtung zum Signalisieren (12) verwendet im nächsten Schritt 210 den paketvermittelt übertragenen Klingelton zur Signalisierung der leitungsvermittelten Verbindung auf Endgerät B. Konkret bedeutet dies, dass der Klingelton abgespielt wird, um dem Nutzer zu verdeutlichen, dass ein Anruf vorliegt.

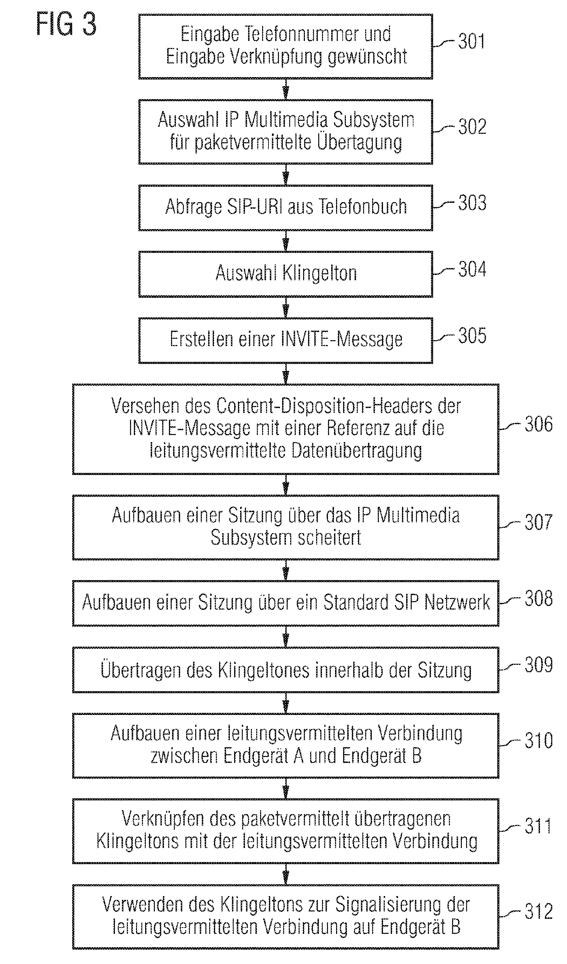

Fig. 3 zeigt ein weiteres Ausführungsbeispiel des erfindungsgemäßen Verfahrens. Zunächst gibt der Nutzer wieder die Telefonnummer des Endgerätes B ein und gibt an, dass er eine verknüpfte paketvermittelte und leitungsvermittelte Datenübertragung wünscht (Schritt 301). Die Einrichtung zum leitungsvermittelten und paketvermittelten Senden und Empfangen von Daten wählt wiederum das IP-Multimedia-Subsystem für die paketvermittelte Übertragung aus (Schritt 302). In Schritt 303 wird der SIP URI anhand der eingegebenen Telefonnummer aus dem Telefonbuch ausgelesen. Der Nutzer wählt wiederum einen Klingelton aus, der dafür verwendet wird, den Anruf auf der Seite des Endgerätes B zu signalisieren (Schritt 304). Die Einrichtung zum leitungsvermittelten und paketvermittelten Senden und Empfangen von Daten erstellt eine INVITE Message (Schritt 305). Eine solche INVITE Message ist dafür nötig, eine Sitzung mit Hilfe des Session Initiation Protocols zu aufzubauen. Diese INVITE Message enthält einen Content-Disposition-Header. In diesem Content-Disposition-Header wird in Schritt 306 eine Referenz auf die leitungsvermittelte Datenübertragung eingefügt. Mit Hilfe dieser INVITE Message versucht die Einrichtung zum leitungsvermittelten und paketvermittelten Senden und Empfangen von Daten in Schritt 307 über das IP-Multimedia-Subsystem eine Sitzung aufzubauen. Dieser Sitzungsaufbau scheitert. Deswegen wird in Schritt 308 eine Sitzung über ein Standard-SIP-Netzwerk aufgebaut. Nach erfolgreichem Aufbau der Sitzung wird der Klingelton übertragen (Schritt 309). Für diese Datenübertragung eignet sich insbesondere das Message Session Relay Protocol oder auch das User Datagram Protocol. Nach der erfolgreichen Übertragung des Klingeltons wird in Schritt 310 eine leitungsvermittelte Verbindung zwischen Endgerät A und Endgerät B aufgebaut. Die Einrichtung zur Verknüpfung der leitungsvermittelten und paketvermittelten Datenübertragung, die sich auf dem Endgerät B befindet, verknüpft den paketvermittelt übertragenen Klingelton mit der leitungsvermittelten Verbindung (Schritt 311). Der Klingelton wird in Schritt 312 verwendet, um den eingehenden Anruf gegenüber dem Nutzer des Endgerätes B zu signalisieren.

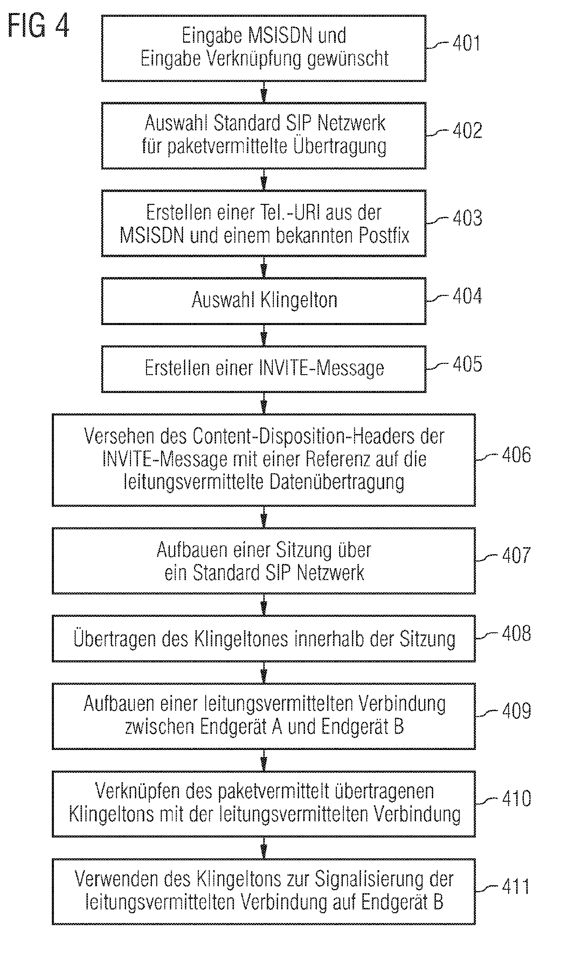

Fig. 4 zeigt ein weiteres Ausführungsbeispiel des erfindungsgemäßen Verfahrens. Zunächst gibt der Nutzer im Schritt 401 eine MSISDN, also eine Telefonnummer, ein und gibt an, dass er eine verknüpfte paketvermittelte und leitungsvermittelte Datenübertragung wünscht. Wieder wird ein Standard-SIP-Netzwerk für die paketvermittelte Datenübertragung ausgewählt (Schritt 402). In Schritt 403 wird ein Tel.-URI erstellt. Dies geschieht, indem die MSISDN einem bekannten Postfix vorangestellt wird. Das heißt, dass die Referenz für die leitungsvermittelte Datenübertragung zu einem Bestandteil der Referenz für die paketvermittelte Datenübertragung wird. In Schritt 404 wählt der Nutzer wiederum einen Klingelton zur Signalisierung seines Anrufes auf der Seite des Endgerätes B aus. Die Einrichtung zum leitungsvermittelten und paketvermittelten Senden und Empfangen von Daten erstellt in Schritt 405 eine INVITE Message. In den Content-Disposition-Header dieser INVITE Message wird eine Referenz auf die leitungsvermittelte Datenübertragung eingefügt (Schritt 406). Mit Hilfe der INVITE Message wird in Schritt 407 eine Sitzung über das Standard-SIP-Netzwerk aufgebaut. Über diese Sitzung wird der Klingelton übertragen (Schritt 408). Anschließend wird eine leitungsvermittelte Verbindung zwischen Endgerät A und Endgerät B aufgebaut (Schritt 409). Die Einrichtung zur Verknüpfung der leitungsvermittelten und paketvermittelten Datenübertragung verknüpft den paketvermittelt übertragenen Klingelton mit der leitungsvermittelten Verbindung auf der Seite des Endgerätes B (Schritt 410). Anschließend verwendet die Einrichtung zum Signalisieren (72), die sich auf dem Endgerät B (70) befindet, den paketvermittelt übertragenen Klingelton, um die leitungsvermittelte Verbindung dem Nutzer des Endgerätes B zu signalisieren (Schritt 411).

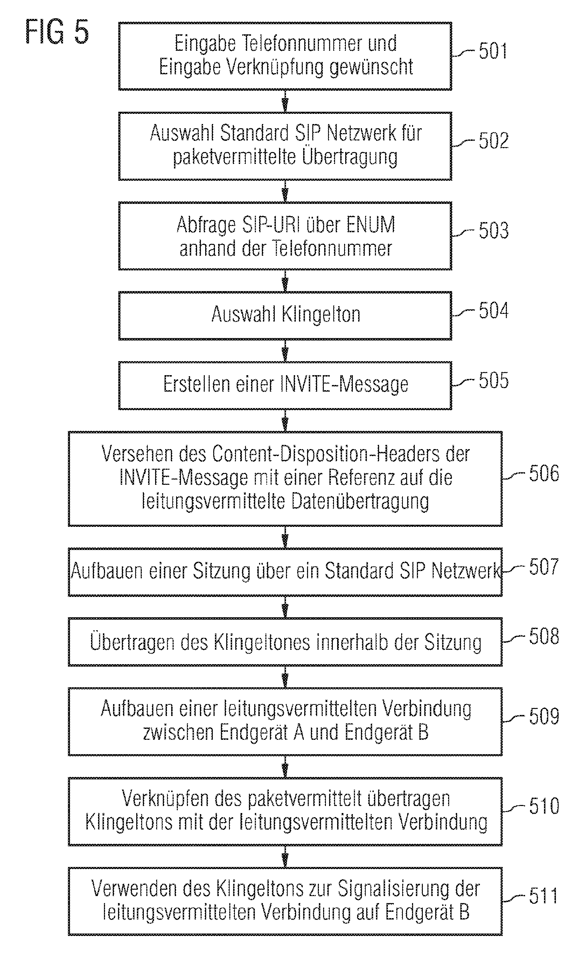

Fig. 5 zeigt ein weiteres Ausführungsbeispiels des erfindungsgemäßen Verfahrens. In Schritt 501 gibt der Nutzer eine Telefonnummer ein und gibt an, dass er eine verknüpfte paketvermittelte und leitungsvermittelte Datenübertragung wünscht. Die Einrichtung zum leitungsvermittelten und paketvermittelten Senden und Empfangen von Daten wählt das Standard-SIP-Netzwerk für die paketvermittelte Datenübertragung aus (Schritt 502). Im vorliegenden Ausführungsbeispiel kann der SIP URI weder über die eingegebene Telefonnummer in Kombination mit dem Telefonbuch ermittelt werden, noch kann ein Tel.-URI erstellt werden, indem einfach die Telefonnummer einem bekannten Postfix vorangestellt wird. Stattdessen wird im vorliegenden Ausführungsbeispiel über ENUM anhand der Telefonnummer der SIP URI erfragt (Schritt 503). ENUM steht für Electronic Numbering und ist im RFC 2916 definiert. ENUM übersetzt eine Telefonnummer in eine SIP-Adresse unter Verwendung des Domain Name Systems. Anschließend wählt der Nutzer in Schritt 504 einen Klingelton aus. Die Einrichtung zum leitungsvermittelten und paketvermittelten Senden und Empfangen von Daten erstellt eine INVITE Message (Schritt 505). In Schritt 506 wird eine Referenz auf die leitungsvermittelte Datenübertragung in den Content-Dispositon-Header der INVITE Message eingefügt. Anschließend wird unter Verwendung der INVITE Message eine Sitzung über das Standard-SIP-Netzwerk aufgebaut (Schritt 507). Nach dem erfolgreichen Aufbau der Sitzung wird der Klingelton übertragen (Schritt 508). Nachdem der Klingelton übertragen wurde, wird eine leitungsvermittelte Verbindung zwischen dem Endgerät A und dem Endgerät B aufgebaut (Schritt 509). Die Einrichtung zur Verknüpfung der leitungsvermittelten und paketvermittelten Datenübertragung, die sich auf dem Endgerät B befindet, verknüpft den paketvermittelt übertragenen Klingelton mit der leitungsvermittelten Verbindung (Schritt 510). Anschließen wird der Klingelton dazu verwendet, die leitungsvermittelte Verbindung gegenüber dem Nutzer des Endgerätes B zu signalisieren (Schritt 511).

Die Erfindung ist nicht auf die oben gezeigten Ausführungsbeispiele beschränkt. Vielmehr ist es möglich, die in den Ausführungsbeispielen beschriebenen Verfahrensschritte in abweichender Weise miteinander zu kombinieren, um auf diese Weise weitere Ausführungsbeispiele bereitzustellen, die für den entsprechenden Anwendungszweck optimiert sind. Soweit derartige Modifikationen für den Fachmann ohne weiteres ersichtlich sind, sollen sie durch die obige Beschreibung der Ausführungsbeispiele 1 bis 5 implizit offenbart sein.

## Patentansprüche

1. Verfahren zur verknüpften leitungsvermittelten und paketvermittelten Übertragung von Daten zwischen einem ersten Endgerät (A) (10) und einem zweiten Endgerät (B) (70), die über ein Netzwerk (40) zur Übertragung von Daten kommunizieren, wobei das Netzwerk zur leitungsvermittelten Datenübertragung und zur paketvermittelten Datenübertragung eingerichtet ist, unter Verwendung einer Einrichtung zum leitungsvermittelten und paketvermittelten Senden und Empfangen von Daten (20; 50) und einer Einrichtung zur Verknüpfung der leitungsvermittelten und paketvermittelten Datenübertragung (30; 60),
**gekennzeichnet durch** die folgenden Schritte:
- Übermitteln von ersten Referenzdaten auf einen Kommunikationsendpunkt des zweiten Endgeräts (B) für die leitungsvermittelte Datenübertragung an die Einrichtung zum leitungsvermittelten und paketvermittelten Senden und Empfangen von Daten **durch** den Nutzer mittels des ersten Endgeräts (A) (201; 301; 401; 501),
- Auswählen eines Protokolls für die paketvermittelte Datenübertragung (202; 302; 402; 502),
- Ermitteln von zweiten Referenzdaten auf einen Kommunikationsendpunkt des zweiten Endgeräts (B) für die paketvermittelte Datenübertragung (203; 303; 403; 503), wobei die zweiten Referenzdaten mit den ersten Referenzdaten verknüpft sind,
- Auswählen von Signalisierungsdaten (204; 304; 404; 504) zur Signalisierung des Aufbaus der leitungsvermittelten Verbindung auf der Seite des zweiten Endgeräts (B) **durch** den Nutzer mittels des ersten Endgeräts (A),
- paketvermitteltes Übertragen der Signalisierungsdaten an das zweite Endgerät (B) (207; 309; 408; 508) unter Verwendung der zweiten Referenzdaten auf den Kommunikationsendpunkt des zweiten Endgeräts (B) für die paketvermittelte Datenübertragung,
- Aufbauen einer leitungsvermittelten Verbindung zwischen dem ersten Endgerät (A) und dem zweiten Endgerät (B) (208; 310; 409; 509) unter Verwendung der ersten Referenzdaten auf den Kommunikationsendpunkt des zweiten Endgeräts (B) für die leitungsvermittelte Datenübertragung,
- Verknüpfen der paketvermittelt übertragenen Daten mit der leitungsvermittelten Verbindung (209; 311; 410; 510) auf der Seite des zweiten Endgeräts (B),
- Signalisieren des Bereitstehens der leitungsvermittelten Verbindung (210; 312; 411; 511) auf der Seite des zweiten Endgeräts (B) unter Verwendung der paketvermittelt übertragenen Signalisierungsdaten.

2. Verfahren nach Anspruch 1, **dadurch gekennzeichnet, dass** mindestens eines der Endgeräte A (10) und/oder B (70) ein Mobiltelefon ist.

3. Verfahren nach einem der vorhergehenden Ansprüche, **dadurch gekennzeichnet, dass** das Netzwerk (40) zur Übertragung von Daten ein Mobilfunknetz ist.

4. Verfahren nach einem der vorhergehenden Ansprüche, **dadurch gekennzeichnet, dass** die ersten Referenzdaten auf einen Kommunikationsendpunkt des zweiten Endgeräts (B) für die leitungsvermittelte Datenübertragung eine Mobile Subscriber Integrated Services Digital Network Number (MSISDN) enthalten.

5. Verfahren nach einem der vorhergehenden Ansprüche, **dadurch gekennzeichnet, dass** das erste Endgerät (A) (10) die Einrichtung zum leitungsvermittelten und paketvermittelten Senden und Empfangen von Daten (20) umfasst.

6. Verfahren nach einem der vorhergehenden Ansprüche, **dadurch gekennzeichnet, dass** das erste Endgerät (A) (10) die Einrichtung zur Verknüpfung der leitungsvermittelten und paketvermittelten Datenübertragung (30) umfasst.

7. Verfahren nach einem der vorhergehenden Ansprüche, **dadurch gekennzeichnet, dass** das zweite Endgerät (B) (70) eine weitere Einrichtung zum leitungsvermittelten und paketvermittelten Senden und Empfangen von Daten (50) umfasst.

8. Verfahren nach einem der vorhergehenden Ansprüche, **dadurch gekennzeichnet, dass** das zweite Endgerät (B) (70) eine weitere Einrichtung zur Verknüpfung der leitungsvermittelten und paketvermittelten Datenübertragung (60) umfasst.

9. Verfahren nach einem der vorhergehenden Ansprüche, **dadurch gekennzeichnet, dass** die zweiten Referenzdaten auf einen Kommunikationsendpunkt des zweiten Endgeräts (B) für die paketvermittelte Datenübertragung ein Session Initiation Protocol Uniform Resource Indentifier (SIP URI) sind.

10. Verfahren nach Anspruch 9, **dadurch gekennzeichnet, dass** der SIP URI **dadurch** ermittelt wird, dass die ersten Referenzdaten auf einen Kommunikationsendpunkt des zweiten Endgeräts (B) für die leitungsvermittelte Datenübertragung einem bekannten Postfix vorangestellt werden.

11. Verfahren nach einem der vorhergehenden Ansprüche, **dadurch gekennzeichnet, dass** die zweiten Referenzdaten auf einen Kommunikationsendpunkt des zweiten Endgeräts (B) für die paketvermittelte Datenübertragung unter Verwendung der ersten Referenzdaten auf einen Kommunikationsendpunkt des zweiten Endgeräts (B) für die leitungsvermittelte Datenübertragung aus einem Adressbuch abgefragt werden.

12. Verfahren nach einem der Ansprüche 9 bis 11, **dadurch gekennzeichnet, dass** die SIP URI mit Hilfe der MSISDN unter Verwendung von ENUM ermittelt wird.

13. Verfahren nach einem der vorhergehenden Ansprüche, **dadurch gekennzeichnet, dass** die Signalisierungsdaten ein Audiosignal sind, das dazu geeignet ist, auf dem zweiten Endgerät (B) abgespielt zu werden.

14. Verfahren nach einem der vorhergehenden Ansprüche, **dadurch gekennzeichnet, dass** die Signalisierungsdaten visuelle Daten sind, die dazu geeignet sind, auf dem zweiten Endgerät (B) angezeigt zu werden.

15. Verfahren nach einem der vorhergehenden Ansprüche, **dadurch gekennzeichnet, dass** die Signalisierungsdaten Daten sind, die von der Identität des Nutzers des ersten Endgerätes (A) abhängen.

16. Verfahren nach einem der vorhergehenden Ansprüche, **dadurch gekennzeichnet, dass** die Signalisierungsdaten eine textuelle Nachricht sind.

17. Verfahren nach einem der vorhergehenden Ansprüche, **dadurch gekennzeichnet, dass** die Signalisierungsdaten eine Animation sind.

18. Verfahren nach einem der vorhergehenden Ansprüche, **dadurch gekennzeichnet, dass** die paketvermittelte Datenübertragung das Internet Protocol gemäß RFC 791 verwendet.

19. Verfahren nach einem der vorhergehenden Ansprüche, **dadurch gekennzeichnet, dass** die paketvermittelte Datenübertragung das Session Initiation Protocol verwendet.

20. Verfahren nach Anspruch 19, **dadurch gekennzeichnet, dass** zur Übertragung der Signalisierungsdaten über das Session Initiation Protocol zunächst eine SIP Sitzung aufgebaut wird.

21. Verfahren nach Anspruch 20, **dadurch gekennzeichnet, dass** zur Übertragung der Signalisierungsdaten das User Datagram Protocol verwendet wird.

22. Verfahren nach Anspruch 20, **dadurch gekennzeichnet, dass** zur Übertragung der Signalisierungsdaten das Message Session Relay Protocol verwendet wird.

23. Verfahren nach Anspruch 19, **dadurch gekennzeichnet, dass** zur Übertragung der Signalisierungsdaten über das Session Initiation Protocol eine Instant Message verwendet wird.

24. Verfahren nach einem der vorhergehenden Ansprüche, **dadurch gekennzeichnet, dass** die paketvermittelte Datenübertragung ein IP Multimedia Subsystem verwendet.

25. Verfahren nach einem der vorhergehenden Ansprüche, **dadurch gekennzeichnet, dass** das erste Endgerät (A) (10) vor der paketvermittelten Datenübertragung der Signalisierungsdaten ein Datenformat der Signalisierungsdaten von dem zweiten Endgerät (B) (70) abfragt.

26. Verfahren nach einem der vorhergehenden Ansprüche, **dadurch gekennzeichnet, dass** die Einrichtung zum leitungsvermittelten und paketvermittelten Senden und Empfangen von Daten (20;50) einen Zugriff in geordneter Reihenfolge auf eine Liste von auswählbaren Protokollen für die paketvermittelte Datenübertragung besitzt, die insbesondere mindestens ein Protokoll nach einem der Ansprüche 18 bis 24 umfasst.

27. Verfahren nach Anspruch 26, **dadurch gekennzeichnet, dass** die Einrichtung zum leitungsvermittelten und paketvermittelten Senden und Empfangen von Daten ein Protokoll aus der Liste auswählt (202; 302; 402; 502) und unter Verwendung des ausgewählten Protokolls die Signalisierungsdaten überträgt.

28. Verfahren nach den Ansprüchen 26 bis 27, **dadurch gekennzeichnet, dass** die Einrichtung zum leitungsvermittelten und paketvermittelten Senden und Empfangen von Daten das Protokoll für die paketvermittelte Datenübertragung für die Übertragung der Signalisierungsdaten verwendet, das auf das zuvor gewählte Protokoll in der Liste folgt, falls die Signalisierungsdaten mittels des zuvor gewählten Protokolls nicht übertragen werden konnten (307; 308).

29. Verfahren nach einem der vorhergehenden Ansprüche, **dadurch gekennzeichnet, dass** eine SIP Nachricht eine Referenz auf eine leitungsvermittelte Verbindung zur Verknüpfung der paketvermittelten Datenübertragung mit der leitungsvermittelten Datenübertragung enthält.

30. Verfahren nach Anspruch 29, **dadurch gekennzeichnet, dass** der Content-Disposition Header oder ein anderer Header einer Instant Message eine Referenz auf eine leitungsvermittelte Verbindung zur Verknüpfung der paketvermittelten Datenübertragung mit der leitungsvermittelten Datenübertragung enthält (206; 306; 406; 506).

31. Verfahren nach Anspruch 29, **dadurch gekennzeichnet, dass** der Content-Disposition Header einer INVITE Message eine Referenz auf eine leitungsvermittelte Verbindung zur Verknüpfung der paketvermittelten Datenübertragung mit der leitungsvermittelten Datenübertragung enthält (206; 306; 406; 506) .

32. Verfahren nach einem der vorhergehenden Ansprüche, **dadurch gekennzeichnet, dass** die Verknüpfung der paketvermittelt übertragenen Daten mit der leitungsvermittelten Verbindung anhand von Daten aus dem Telefonbuch des zweiten Endgeräts (B) vorgenommen wird.

33. Verfahren nach einem der vorhergehenden Ansprüche, **dadurch gekennzeichnet, dass** die Verknüpfung der paketvermittelt übertragenen Daten mit der leitungsvermittelten Verbindung **dadurch** vorgenommen wird, dass die ersten Referenzdaten auf einen Kommunikationsendpunkt des zweiten Endgeräts (B) für die leitungsvermittelte Datenübertragung Bestandteil der zweiten Referenzdaten auf einen Kommunikationsendpunkt des zweiten Endgeräts (B) für die paketvermittelte Datenübertragung sind (403) .

34. Verfahren nach einem der vorhergehenden Ansprüche, **dadurch gekennzeichnet, dass** die Verknüpfung der paketvermittelt übertragenen Daten mit der leitungsvermittelten Verbindung **dadurch** vorgenommen wird, dass die zweiten Referenzdaten auf einen Kommunikationsendpunkt des zweiten Endgeräts (B) für die paketvermittelte Datenübertragung Bestandteil der ersten Referenzdaten auf einen Kommunikationsendpunkt des zweiten Endgeräts (B) für die leitungsvermittelte Datenübertragung sind.

35. Verfahren nach einem der vorhergehenden Ansprüche, **dadurch gekennzeichnet, dass** die Verknüpfung der paketvermittelt übertragenen Daten mit der leitungsvermittelten Verbindung eine Synchronisation der paketvermittelt übertragenen Daten mit der leitungsvermittelten Verbindung umfasst.

36. Verfahren nach einem der vorhergehenden Ansprüche, **dadurch gekennzeichnet, dass** die paketvermittelt übertragenen Daten als ungültig **gekennzeichnet** und/oder gelöscht werden, wenn die verknüpfte leitungsvermittelte Verbindung nicht aufgebaut werden kann.

37. Verfahren nach einem der vorhergehenden Ansprüche, **dadurch gekennzeichnet, dass** zum Signalisieren des Bereitstehens der leitungsvermittelten Verbindung auf der Seite des zweiten Endgeräts (B) das paketvermittelt übertragene Audiosignal abgespielt wird.

38. Verfahren nach einem der vorhergehenden Ansprüche, **dadurch gekennzeichnet, dass** zum Signalisieren des Bereitstehens der leitungsvermittelten Verbindung auf der Seite des zweiten Endgeräts (B) die paketvermittelt übertragenen visuellen Daten angezeigt werden.

39. Verfahren nach einem der vorhergehenden Ansprüche, **dadurch gekennzeichnet, dass** zum Signalisieren des Bereitstehens der leitungsvermittelten Verbindung auf der Seite des zweiten Endgeräts (B) die paketvermittelt übertragenen Daten angezeigt werden, die von der Identität des Nutzers des ersten Endgerätes (A) abhängen.

40. Verfahren nach einem der vorhergehenden Ansprüche, **dadurch gekennzeichnet, dass** zum Signalisieren des Bereitstehens der leitungsvermittelten Verbindung auf der Seite des zweiten Endgeräts (B) die paketvermittelt übertragene textuelle Nachricht angezeigt wird.

41. Verfahren nach einem der vorhergehenden Ansprüche, **dadurch gekennzeichnet, dass** zum Signalisieren des Bereitstehens der leitungsvermittelten Verbindung auf der Seite des zweiten Endgeräts (B) die paketvermittelt übertragene Animation angezeigt wird.

42. System zur Durchführung des Verfahrens nach einem der vorhergehenden Ansprüchen, umfassend
- eine Einrichtung zur Ermittlung von zweiten Referenzdaten auf einen Kommunikationsendpunkt des zweiten Endgeräts (B) für die paketvermittelte Datenübertragung (31), wobei die zweiten Referenzdaten mit den ersten Referenzdaten verknüpft sind,
- eine Einrichtung zur Auswahl von Signalisierungsdaten (11) zur Signalisierung des Aufbaus der leitungsvermittelten Verbindung auf der Seite des zweiten Endgeräts (B) durch den Nutzer mittels des ersten Endgeräts (A),
- eine Einrichtung zur paketvermittelten Übertragung (21) der Signalisierungsdaten an das zweite Endgerät (B) unter Verwendung der zweiten Referenzdaten auf den Kommunikationsendpunkt des zweiten Endgeräts (B) für die paketvermittelte Datenübertragung,
- eine Einrichtung zum Aufbau einer leitungsvermittelten Verbindung (22) zwischen dem ersten Endgerät (A) und dem zweiten Endgerät (B) unter Verwendung der ersten Referenzdaten auf den Kommunikationsendpunkt des zweiten Endgeräts (B) für die leitungsvermittelte Datenübertragung,
- eine Einrichtung zur Verknüpfung (60) der paketvermittelt übertragenen Daten mit der leitungsvermittelten Verbindung auf der Seite des zweiten Endgeräts (B) und
- eine Einrichtung zum Signalisieren (72) des Bereitstehens der leitungsvermittelten Verbindung auf der Seite des zweiten Endgeräts (B) unter Verwendung der paketvermittelt übertragenen Signalisierungsdaten.

43. Computerprogrammprodukt, das in den Speicher eines Endgerätes geladen werden kann, umfassend Programmteile zur Durchführung von Schritten von mindestens einem der Ansprüche 1 bis 41, wenn das Computerprogrammprodukt auf dem Endgerät ausgeführt wird.

44. Erstes Endgerät (A) (10) eingerichtet zur Durchführung des Verfahrens nach einem der vorhergehenden Ansprüche.

45. Zweites Endgerät (B) (70) eingerichtet zur Durchführung des Verfahrens nach einem der vorhergehenden Ansprüche.
